Europäisches Patentamt

European Patent Office

Office européen des brevets

(19)

(11) **EP 1 200 634 B1**

(12) **FASCICULE DE BREVET EUROPEEN**

(45) Date de publication et mention
de la délivrance du brevet:
**23.07.2003 Bulletin 2003/30**

(21) Numéro de dépôt: **00938810.9**

(22) Date de dépôt: **22.06.2000**

(51) Int Cl.⁷: **C21C 5/52**, C21C 5/54

(86) Numéro de dépôt international:
**PCT/EP00/05788**

(87) Numéro de publication internationale:
**WO 01/000886 (04.01.2001 Gazette 2001/01)**

(54) **PROCEDE D'OPTIMISATION DU FONCTIONNEMENT D'UN FOUR ELECTRIQUE DU TYPE A ARC SUBMERGE**

OPTIMIERUNGSVERFAHREN ZUM BETRIEB EINES ELEKTROOFENS MIT VERDECKTEM LICHTBOGEN

METHOD FOR OPTIMISING THE OPERATING CONDITIONS OF A SMOTHERED ARC FURNACE

(84) Etats contractants désignés:
**AT BE CH CY DE DK ES FI FR GB GR IE IT LI LU MC NL PT SE**

(30) Priorité: **25.06.1999 LU 90409**

(43) Date de publication de la demande:
**02.05.2002 Bulletin 2002/18**

(73) Titulaire: **PAUL WURTH S.A.**
**1122 Luxembourg (LU)**

(72) Inventeur: **ROTH, Jean-Luc**
**F-57100 Thionville (FR)**

(74) Mandataire: **Schmitt, Armand et al**
**Office Ernest T. Freylinger S.A.**
**234, route d'Arlon,**
**B.P. 48**
**8001 Strassen (LU)**

(56) Documents cités:
**EP-A- 0 637 634**          **US-A- 4 113 468**
**US-A- 4 504 308**

• **PATENT ABSTRACTS OF JAPAN vol. 004, no. 140 (C-026), 3 octobre 1980 (1980-10-03) & JP 55 089414 A (DAIDO STEEL CO LTD), 7 juillet 1980 (1980-07-07)**

## Description

### *Introduction*

La présente invention concerne un procédé d'optimisation du fonctionnement d'un four électrique du type à arc submergé, pour la production de métal liquide.

Il est connu d'utiliser des fours électriques à arc submergé (fours SAF) pour la production de ferro-alliages (Fe-Mn, Fe-Cr,...) et de fontes, par réduction-fusion de charges de minerai déjà plus ou moins préréduit, en utilisant notamment du coke comme réducteur. Il est également connu d'utiliser ces fours SAF pour la réduction-fusion de déchets métalliques, notamment des poussières métalliques qui sont chargées sous forme de fines, granulés ou boulettes. Les procédés de réduction-fusion dans ces fours SAF se distinguent généralement par une production importante de laitier; la masse de laitier pouvant être comparable ou supérieure à la masse de métal. Le bain métallique est par conséquent recouvert d'une couche de laitier liquide de hauteur importante (environ 0,4 m à 1,50 m), qui représente une charge d'environ 1 à 3,75 tonnes de laitier par mètre carré de bain. Les électrodes du four SAF sont agencées dans la zone centrale du four, alors que l'enfournement de la charge se fait en zone périphérique, c'est-à-dire entre la zone centrale des électrodes et la paroi du four.

Dans le four SAF, l'énergie thermique nécessaire pour la fusion des produits métalliques est générée par conduction du courant dans le laitier liquide. Il n'y par conséquent pas d'arc plasma (ou arc libre) proprement dit, qui s'établit en les électrodes et le bain métallique. La puissance électrique développée dans un four SAF est par conséquent seulement de 0,2 à 0,5 MW par m$^2$ de creuset, ce qui est une puissance très faible par rapport à une puissance d'environ 2 MW par m$^2$ de creuset développée dans les fours à arc libre. Comme les besoins énergétiques pour la réduction-fusion de ferro-alliages ou de déchets métalliques sont par contre très élevés, il en résulte que la productivité de des fours SAF laisse actuellement encore à désirer.

### *Problème à la base de l'invention*

Le problème à la base de la présente invention est d'accroître la productivité d'un four SAF. Conformément à l'invention, ce problème est résolu par un procédé selon la revendication 1.

### *Description générale de l'invention revendiquée avec ses principaux avantages.*

Le procédé selon l'invention permet l'optimisation du fonctionnement d'un four électrique du type à arc submergé, pour la production de métal liquide. Ce four électrique comprend au moins une électrode et contient un bain de métal liquide recouvert d'une épaisse couche de laitier liquide ayant une masse surfacique d'au moins 1t/m$^2$. Selon un aspect important de l'invention, on fait mousser la couche de laitier localement autour de l'électrode, de manière à créer autour de cette électrode une couche locale de laitier moussant dans laquelle la densité du laitier est au moins 50% plus faible que dans le reste du four. Si le four comporte plusieurs électrodes on fera de préférence mousser la couche de laitier localement autour de toutes les électrodes du four.

Le procédé selon l'invention offre la possibilité d'optimiser le fonctionnement d'un four électrique SAF comprenant une importante quantité de laitier liquide, et notamment d'accroître sa productivité. En effet, la création d'une couche locale de laitier moussant change la forme du passage de l'énergie électrique dans le bain. On passe, au moins partiellement, d'une conduction du courant électrique dans du laitier liquide résistif, à un arc « plasma » formé dans un milieu gazeux, même si ce milieu comprend également une certaine proportion de laitier liquide. On peut ainsi accroître les caractéristiques d'arc, c'est-à-dire la tension d'arc et la longueur d'arc. Le champ électrique en mode plasma immergé dans un laitier moussant est au moins deux à quatre fois plus important qu'en mode résistif (conduction dans le laitier liquide). Il en résulte une augmentation appréciable de la puissance du four SAF. Puisque la puissance est accrue, il est possible de diminuer le temps de fusion, d'où une augmentation de la productivité. Par ailleurs, les conditions de production de métal liquide en laitier moussant sont moins agressives qu'en laitier liquide. C'est pourquoi la consommation d'électrode dans la couche locale de laitier moussant est moindre.

Le four électrique peut contenir un bain de métal liquide recouvert d'une épaisse couche de laitier liquide ayant une épaisseur de 0,4 à 1,5 m. De préférence, la couche locale de laitier moussant entourant l'électrode comprend au moins 50% de gaz, de manière optimale, au moins 80% de gaz.

Avantageusement, on forme la couche locale de laitier moussant par ajout d'au moins un combustible carboné et/ou d'au moins un comburant dans, ou sur, ladite couche de laitier et/ou ledit bain de métal liquide. La réaction du combustible carboné avec l'oxygène contenu dans le bain de métal liquide permet la production de CO, ce qui fait mousser le laitier. De plus, la combustion du combustible carboné constitue un apport d'énergie qui vient s'ajouter à l'énergie thermique d'origine électrique, pour la réduction-fusion. En injectant du gaz contenant de l'oxygène dans le tiers supérieur de la couche de laitier on peut effectuer la post-combustion du CO, réaction qui participe également à l'apport d'énergie thermique.

Selon un mode de réalisation préféré, le four électrique comprend au moins trois électrodes agencées au centre du four. On crée alors une couche locale de laitier moussant entre les trois électrodes. En d'autres termes, la couche locale de laitier moussant entoure chaque électrode et s'étend entre les électrodes, au centre du four.

De préférence, on ajoute des matières premières principalement au centre du four électrique.

Selon un premier mode de réalisation, l'ajout de matières premières se fait sous forme de fines, injectées dans la partie inférieure de la couche de laitier et/ou dans le bain de métal liquide. Il est par exemple possible d'injecter de cette façon des fines de minerai de fer préréduit.

Selon un deuxième mode de réalisation, on ajoute des matières premières sous forme de boulettes (pellets) ou briquettes. Ceci permet d'introduire dans le four électrique des matières premières qui ne peuvent être injectées, en les agglomérant par exemple en boulettes (pellets) ou briquettes de densité suffisante pour pénétrer la couche de laitier.

### Description à l'aide des Figures

D'autres particularités et caractéristiques de l'invention ressortiront de la description détaillée d'un mode de réalisation avantageux présenté ci-dessous, à titre d'illustration, en se référant au dessin annexé. Celui-ci montre :

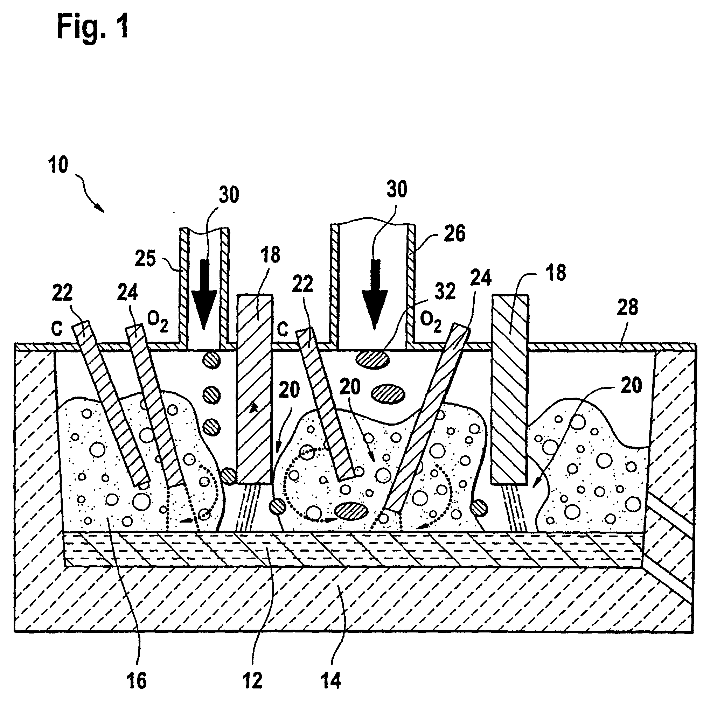

Fig. 1: vue en coupe d'un four électrique du type à arc submergé dans lequel est mis en oeuvre le procédé selon la présente invention.

Sur la Fig.1 est représentée une vue en coupe d'un four électrique 10 du type à arc submergé (four SAF : Submerged Arc Furnace). Un bain de métal liquide 12 est reçu par la sole 14 dû four. Au dessus du bain de métal se trouve une épaisse couche de laitier liquide 16. Cette couche de laitier liquide peut atteindre des hauteurs dépassant 1,5 m. Elle représente une charge d'environ 1 à 3,75 tonnes par mètre carré de bain métallique. Au centre du four sont agencées plusieurs électrodes 18, dont deux sont visibles sur la Fig. 1. L'extrémité inférieure de ces électrodes se trouve bien en-dessous du niveau normal de laitier dans la sole 14.

Il sera apprécié que l'on fait mousser la couche de laitier liquide 16 autour des électrodes 18, de manière à créer une couche locale de laitier moussant 20 dans laquelle la densité du laitier est au moins 50% plus faible que dans le reste du four électrique. Lorsque le four comprend trois électrodes, elles sont généralement placées en triangle, au centre du four. On formera alors la couche locale de laitier moussant de façon à ce qu'elle s'étende entre les trois électrodes et entoure chacune d'elles. La couche locale de laitier moussant modifie le mode de passage de l'énergie électrique dans le bain et le laitier. On notera que les électrodes sont ici placées en triangle, mais elles pourraient également être alignées. De plus, le four pourrait comporter plus de trois électrodes.

Lorsque les électrodes sont entourées de laitier liquide, l'apport d'énergie électrique se fait par conduction. En créant une couche locale de laitier moussant autour des électrodes, il est possible de former des arcs « plasma» dans un milieu quasi gazeux, ce qui accroît la caractéristique d'arc. Un champ électrique qui serait de 0,1 V/mm en mode résistif (conduction dans le laitier liquide) peut être accru jusqu'à 0,5 V/mm en mode arcs plasma dans la couche locale de laitier moussant.

On remarquera que le procédé de la présente est bien adapté à la production de métal liquide à partir de matière premières générant beaucoup de laitier, par ex. minerai de fer plus ou moins préréduit et déchets métalliques. Même avec des couches de laitier liquide jusqu'à 1,5 m d'épaisseur, on peut faire mousser localement le laitier dans la zone des électrodes. Il est ainsi possible de profiter des conditions de production en laitier moussant, sans risques de débordement.

Afin de créer la couche locale de laitier moussant, on peut par exemple ajouter du carbone et de l'oxygène dans la couche inférieure de laitier et/ou le bain de métal liquide. La Fig. 1 montre par exemple une lance 22 qui injecte un jet de solide carboné pulvérulent dans le tiers inférieur de la couche de laitier 16. Le débit unitaire de solide carboné pulvérulent de la lance 22 est de 10 à 30 kg/min, en respectant un ratio de débit surfacique de 0,5 à 5 kg/min.m$^2$, de préférence 1 kg/min. m$^2$. On peut également injecter un jet d'oxygène primaire à l'aide d'une lance 24 dans le tiers inférieur de la couche de laitier 16. Le débit d'oxygène est préférentiellement proportionnel au débit de carbone, à raison de 1 à 2 m$^3$/kg. Ce jet d'oxygène primaire est destiné à produire du CO, conformément aux réactions suivantes :

$$C_{(bain\ métal)} + \tfrac{1}{2}O2 \rightarrow CO$$

et

$$Fe_{(bain\ métal)} + \tfrac{1}{2}O2 \rightarrow FeO,$$

suivie de

$$FeO + C_{(injecté)} \rightarrow Fe + CO$$

Un jet d'oxygène secondaire peut être injecté dans le tiers supérieur du laitier 16 (non représenté), afin de brûler le CO :

$$CO + \tfrac{1}{2}O_2 \rightarrow CO_2$$

Cette postcombustion du CO dégage une énergie plus importante que la combustion de C en CO.

On notera que la quantité d'oxygène injectée est ajustée en fonction de la quantité d'oxydes réductibles contenue dans les matières premières (produits métalliques à réduire et fondre). Si les matières premières contiennent beaucoup d'oxydes, comme par ex. FeO ou NiO, on pourra réduire, voire même annuler, la quantité d'oxygène injectée pour faire mousser le laitier.

Il est clair que le carbone ajouté pour faire mousser le laitier doit être introduit en supplément de celui nécessaire pour la réduction de la charge et la décarburation du métal.

Suivant les quantités d'oxygène et de carbone introduites et contenues dans le bain 12, il est donc possible de faire varier la proportion de gaz dans la couche de laitier moussant 20. On veillera à former une couche de laitier moussant 20 contenant au moins 50% de gaz, et de préférence plus de 80% de gaz.

Les signes de références 25 et 26 indiquent une ouverture périphérique, respectivement centrale, dans la voûte 28 du four 10, pour l'introduction de matières premières.

Les matières premières sous forme de fines ou granulés sont préférentiellement injectées dans la couche inférieure de laitier et/ou à l'interface bain/laitier (non représenté).

Les matières premières non injectables sont agglomérées sous formes de briquettes ou boulettes (pellets) et sont introduites de préférence par l'ouverture centrale 26. Les briquettes et boulettes (pellets) sont fabriquées de sorte que leur masse leur permette de pénétrer la couche de laitier, et qu'elles puissent se désagréger facilement.

Sur la Fig.1, les flèches 30 indiquent l'introduction dans le four 10 de boulettes 32 par les ouvertures périphérique 25 et centrale 26.

Exemple théorique chiffré

Un four SAF existant de diamètre de creuset 3,5 m (surface de creuset $\approx$ 10 m$^2$) développe une puissance de 3 MW. Pour la réduction-fusion d'une tonne de charge on a besoin d'une énergie de 1500 kWh. Lorsque le four SAF fonctionne de manière conventionnelle (c'est-à-dire avec un laitier liquide entourant les électrodes), l'efficacité thermique électrique est d'environ 0,7, et la productivité « brute » (hors temps de coulée et d'arrêt) est de

$$3000 \text{ (kW)} \times 0,7 / 1500 \text{ (kWh/t)} \approx 1,4 \text{ t/h.}$$

L'injection à proximité des électrodes de 10 kg/min de carbone avec une capacité énergétique de 9 kWh/kg constitue un apport de

$$10 \times 9 \times 60 = 5400 \text{ kW.}$$

En réalisant le transfert de l'énergie du carbone avec une efficacité de 40%, on monte la productivité à

$$((3000 \times 0,7) + (5400 \times 0,4)) / 1500 \approx 2,8 \text{ t/h.}$$

De plus, le dégagement de CO à proximité des électrodes forme une couche locale de laitier moussant entourant les électrodes et favorise par conséquent l'établissement d'un arc plasma. En renforçant l'alimentation électrique des électrodes (changement de transformateur, à courant maximal constant), on peut doubler la tension d'arc. La puissance électrique développée passe ainsi à 6 MW. En admettant au premier ordre que l'efficacité thermique électrique ne change pas, la productivité du four est potentiellement accrue à

$$((6000 \times 0,7) + (5400 \times 0,4)) / 1500 \approx 4,2 \text{ t/h.}$$

Un calcul des consommations permet de se faire une idée de la rentabilité du procédé. Pour les besoins en oxygène, on compte un ratio de 1,5 m$^3$ de O$_2$ par kg de carbone.

En fonctionnement conventionnel, la consommation est:

$$3000 / 1,4 = 2143 \text{ kWh/t.}$$

En considérant l'apport d'énergie du solide carboné pulvérulent, on consomme :

- énergie électrique : 3000 / 2,8 = 1071 kWh
- carbone : (10 x 60) / 2,8 = 214 kg/t
- oxygène : 214 x 1,5 = 321 m$^3$/t

Pour ce qui est du fonctionnement avec apport d'énergie du solide carboné pulvérulent et arc plasma, on consomme :

- énergie électrique : 6000 / 4,2 = 1428 kWh
- carbone : (10 x 60) / 4,2 = 143 kg/t
- oxygène : 143 x 1,5 = 214 m$^3$/t

Comme le montrent ces calculs, 1kg de C et 1,5 m$^3$ d'O$_2$ se substituent à 5 kWh d'énergie électrique. Cette substitution ne cause guère de coûts d'exploitation supplémentaires. Toutefois, l'augmentation de productivité (de 1,4 à 4,2 t/h) est telle que le procédé se révèle très rentable.

**Revendications**

1. Procédé de production de métal liquide par réduction-fusion de matières premières dans un four électrique (10) du type à arc submergé comprenant au moins une électrode (18), ledit procédé engendrant la production d'importantes quantités de laitier, de sorte que ledit four électrique (10) contient un bain de métal liquide (12) recouvert d'une épaisse couche de laitier liquide (16) ayant une masse surfacique d'au moins 1t/m$^2$, **caractérisé en ce qu'**on fait mousser ladite épaisse couche de laitier liquide localement autour de ladite au moins une électrode (18), de manière à créer autour de cette électrode (18) une couche locale de laitier moussant (20) dans laquelle la densité du laitier est au moins 50% plus faible que dans le reste dudit four électrique (10).

2. Procédé selon la revendication 1, **caractérisé en ce que** ledit four électrique (10) contient un bain de métal liquide (12) recouvert d'une épaisse couche de laitier liquide (16) ayant une épaisseur de 0,4 à 1,5 m.

3. Procédé selon la revendication 1 ou 2, **caractérisé en ce que** ladite couche locale de laitier moussant (20) comprend au moins 50% de gaz, de préférence au moins 80% de gaz.

4. Procédé selon la revendication 1, 2 ou 3, **caractérisé en ce qu'**on forme ladite couche locale de laitier moussant (20) par ajout d'au moins un combustible carboné et/ou d'au moins un comburant dans, ou sur, ladite couche de laitier et/ou ledit bain de métal liquide.

5. Procédé selon la revendication 4, **caractérisé en ce que** l'on injecte un solide carboné pulvérulent dans le tiers inférieur de ladite couche de laitier.

6. Procédé selon la revendication 4 ou 5, **caractérisé en ce que** l'on injecte un gaz contenant de l'oxygène dans le tiers supérieur de ladite couche de laitier.

7. Procédé selon l'une quelconque des revendications précédentes, **caractérisé en ce que** ledit four électrique (10) comprend au moins trois électrodes (18) au centre de celui-ci et **en ce que** l'on crée ladite couche locale de laitier moussant (20) entre les trois électrodes (18).

8. Procédé selon l'une quelconque des revendications précédentes, **caractérisé en ce qu'**on ajoute des matières premières principalement au centre du dudit four électrique (10).

9. Procédé selon la revendication 8, **caractérisé en ce que** l'on ajoute des matières premières sous forme de fines, injectées dans la partie inférieure de ladite couche de laitier et/ou dans ledit bain de métal liquide.

10. Procédé selon la revendication 8 ou 9, **caractérisé en ce que** l'on ajoute des matières premières sous forme de boulettes (32) ou briquettes.

**Patentansprüche**

1. Verfahren zur Herstellung von flüssigem Metall durch Schmelzreduktion von Rohstoffen in einem Elektroofen (10) mit verdecktem Lichtbogen mit mindestens einer Elektrode (18), bei welchem Verfahren große Schlackenmengen anfallen, derart, dass der Elektroofen (10) ein Flüssigmetallbad (12) enthält, das von einer dicken Flüssigschlackeschicht (16) mit einer flächenbezogenen Masse von mindestens 1 t/m$^2$ überdeckt ist, **dadurch gekennzeichnet, dass** die dicke Flüssigschlackeschicht lokal um die mindestens eine Elektrode (18) herum aufgeschäumt wird, um um diese Elektrode (18) herum eine lokale Schaumschlackeschicht (20) zu bilden, in der die Dichte der Schlacke um mindestens 50 % geringer ist als im Rest des Elektroofens (10).

2. Verfahren nach Anspruch 1, **dadurch gekennzeichnet, dass** der Elektroofen (10) ein Flüssigmetallbad (12) enthält, das von einer dicken Flüssigschlackeschicht (16) mit einer Dicke von 0,4 bis 1,5 m überdeckt ist.

3. Verfahren nach Anspruch 1 oder 2, **dadurch gekennzeichnet, dass** die lokale Schaumschlackeschicht (20) mindestens 50 % Gas, vorzugsweise mindestens 80 % Gas enthält.

4. Verfahren nach Anspruch 1, 2 oder 3, **dadurch gekennzeichnet, dass** die lokale Schaumschlackeschicht (20) durch Zugabe von mindestens einem kohlenstoffhaltigen Brennstoff und/oder mindestens einem Sauerstoffträger in oder auf die Schlackeschicht und/oder das Metallbad gebildet wird.

5. Verfahren nach Anspruch 4, **dadurch gekennzeichnet, dass** ein pulvriger, kohlenstoffhaltiger Feststoff in das untere Drittel der Schlackeschicht eingeblasen wird.

6. Verfahren nach Anspruch 4 oder 5, **dadurch gekennzeichnet, dass** ein Sauerstoff enthaltendes Gas in das obere Drittel der Schlackeschicht eingeblasen wird.

7. Verfahren nach einem der vorhergehenden Ansprüche, **dadurch gekennzeichnet, dass** der Elektroofen (10) mindestens drei Elektroden (18) in seiner Mitte aufweist und dass die lokale Schaumschlackeschicht (20) zwischen den drei Elektroden (18) gebildet wird.

**8.** Verfahren nach einem der vorhergehenden Ansprüche, **dadurch gekennzeichnet, dass** Rohstoffe hauptsächlich in der Mitte des Elektroofens (10) zugegeben werden.

**9.** Verfahren nach Anspruch 8, **dadurch gekennzeichnet, dass** Rohstoffe in Form von Feingut zugegeben werden, das in den unteren Bereich der Schlackeschicht und/oder des Flüssigmetallbades eingeblasen wird.

**10.** Verfahren nach Anspruch 8 oder 9, **dadurch gekennzeichnet, dass** Rohstoffe in Form von Pellets (32) oder Briketts zugegeben werden.

**Claims**

**1.** Method of producing molten metal by reduction and melting of raw materials in a submerged arc type electric furnace (10), comprising at least one electrode (18), said method generating substantial amounts of slag, so that said electric furnace (10) contains a bath of molten metal (12) covered with a thick layer of molten slag (16) having a mass per unit area of at least 1 t/m$^2$, **characterised in that** said thick layer of molten slag is made to foam locally around said at least one electrode (18) so as to create around this electrode (18) a local layer of foaming slag (20) in which the density of the slag is at least 50 per cent lower than in the rest of said electric fumace (10).

**2.** Method according to Claim 1, **characterised in that** said electric furnace (10) contains a bath of molten metal (12) covered with a thick layer of molten slag (16) having a thickness from 0.4 to 1.5 m.

**3.** Method according to Claim 1 or 2, **characterised in that** said local layer of foaming slag (20) comprises at least 50 per cent of gas, preferably at least 80 per cent of gas.

**4.** Method according to Claim 1, 2 or 3, **characterised in that** said local layer of foaming slag (20) is formed by the addition of at least one carbon-containing fuel and/or at least one oxidant, in or on said layer of slag and/or said bath of molten metal.

**5.** Method according to Claim 4, **characterised in that** a solid carbon-containing pulverised material is injected into the lower third of said layer of slag.

**6.** Method according to Claim 4 or 5, **characterised in that** a gas containing oxygen is injected into the top third of said layer of slag.

**7.** Method according to any one of the preceding claims, **characterised in that** said electric furnace (10) comprises at least three electrodes (18) at its centre and **in that** said local layer of foaming slag (20) is created between the three electrodes (18).

**8.** Method according to any one of the preceding claims, **characterised in that** raw materials are added mainly at the centre of said electric furnace (10).

**9.** Method according to Claim 8, **characterised in that** raw materials are added in the form of fines injected into the lower part of said layer of slag and/or into said bath of molten metal.

**10.** Method according to Claim 8 or 9, **characterised in that** raw materials are added in the form of pellets (32) or bricks.

## Fig. 1